# EUROPÄISCHE PATENTANMELDUNG

(11) **EP 0 830 817 A2**
(43) Veröffentlichungstag der Anmeldung: **25.03.1998**
(21) Anmeldenummer: 97810642.5
(22) Anmeldetag: 09.09.1997
(51) Int. Cl.: A21C 9/08

(54) **Verfahren und Vorrichtung zur Herstellung von Fertiglasagne oder ähnlichen Gerichten**

(30) Priorität: 13.09.1996 CH 2246/96
(71) Anmelder: frigemo Produktion J. Caprez-Danuser AG, 7007 Chur (CH)
(72) Erfinder: Caprez, Gion, 7208 Malans (CH)
(74) Vertreter: Riederer, Conrad A., Dr.

(57) **Zusammenfassung**

Statt in herkömmlicher Weise Fertiglasagne oder ähnliche Gerichten durch manuelles Einlegen von Teigplatten und automatisches Auftragen von Saucenschichten herzustellen, erfolgt die Herstellung automatisch. Mit Fördermitteln (25) und einer Teigablagevorrichtung (23) wird ein Teigband (33) gegen den Boden (4) einer Schale (13) bewegt. Gleichzeitig findet eine Relativbewegung zwischen Boden (14) und Teigablagevorrichtung (23) parallel zum Boden (14) statt, so dass jede Teiglage von einem Ende zum andern des Bodens (14) abgelegt wird. Das Ablegen einer Teiglage kann sowohl bei einer Hin- als auch bei einer Herbewegung erfolgen, wobei gleichzeitig eine Saucenschicht aufgetragen werden kann. Bei jeder Richtungsumkehr, spätestens wenn die Schale (13) gefüllt ist, wird das Teigband (33) geschnitten. Wird bei der Richtungsumkehr nicht geschnitten, entsteht eine Schlaufenlasagne.

## Beschreibung

Die Erfindung betrifft ein Verfahren und eine Vorrichtung zur Herstellung von Fertiglasagne oder ähnlichen Gerichten durch Uebereinanderanordnen von Teiglagen und Saucen- oder anderen Füllungsschichten über einer Ablagefläche, bei welchem Verfahren die Teiglagen mit einer Ablagevorrichtung von einem Ende zum andern der Ablagefläche abgelegt werden.

Es sind bereits seit längerer Zeit Fertiglasagnen auf dem Markt, welche im Backofen, Mikrowellenherd oder anderen Kochgeräten tischfertig zubereitet werden können. Diese Fertiglasagnen bestehen aus einer Schichtung von Teigplatten mit dazwischen liegenden Füllungen.

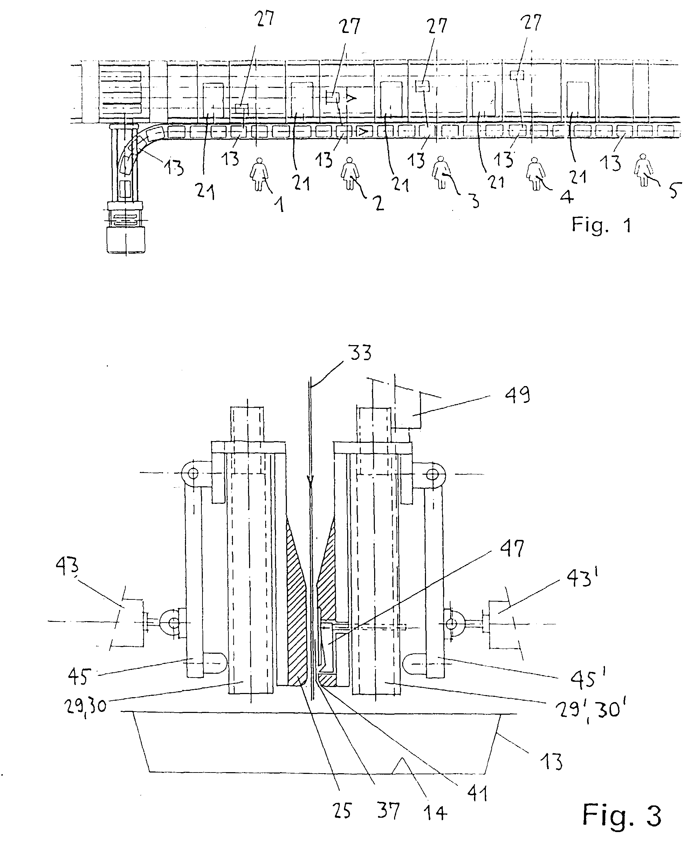

In Figur 1 ist eine bekannte Anlage zur Herstellung von Fertiglasagnen schematisch dargestellt. Sie wird von fünf Personen bedient, von denen sich vier mit dem Einlegen von Teigplatten in die Schalen beschäftigen. Die fünfte Person überwacht die gefüllten Schalen und streut Käse ein. Wie in der Figur 1 schematisch dargestellt ist, wird ein breites Teigband beispielsweise in vier schmalere Bänder aufgeteilt und diese Bänder in Platten geschnitten. Die Platten werden dann an den Bearbeitungsstationen eins bis vier vorbeigeführt, wo sie von den Bedienungspersonen ergriffen und in die Schalen eingelegt werden, die ebenfalls an den Bearbeitungsstationen vorbeigeführt werden. Fünf Saucendosier- und Auftragvorrichtungen sind vorgesehen, um Sauce in die Schale, bzw. auf die eingelegten Teigplatten automatisch aufzutragen.

Es wäre denkbar, das Beschicken der Schalen mit Teigplatten dadurch zu automatisieren, dass mit einem Greifer die Teigplatten automatisch erfasst und in die Schalen eingelegt werden, und dass nach jedem Einlegen einer Teigplatte automatisch Sauce auf diese Teigplatte aufgetragen wird. Trotz des starken Bedürfnisses, die hohen Personalkosten für die Produktion von Fertiglasagnen zu reduzieren, hat jedoch noch kein Maschinenhersteller eine Maschine auf den Markt gebracht,bei welcher zur Herstellung von Fertiglasagnen Teigplatten mit Greifern automatisch gehandhabt werden. Offenbar stellten sich der Automatisierung erhebliche Hindernisse entgegen.

Die FR-A-2 691 617 zeigt eine Maschine zur Herstellung von Gerichten, z.B. Lasagne, die aus mehreren Teigschichten und einer Füllung zwischen den Teigschichten bestehen. Die Maschine besteht im wesentlichen aus einem trogartigen Arbeitstisch und einem über dem Tisch verfahrbaren Wagen mit einem Teigband- und einem Saucenbehälter. Zur Herstellung von Lasagne wird ein Ende des Teigbands an einem Ende des Tisches festgeklemmt und dann der Wagen bis zum anderen Ende Tisches verfahren, worauf das Teigband geschnitten wird. Bei der Rückfahrt wird der Saucenbehälter geöffnet und die Teiglage mit Sauce bedeckt. Hierauf beginnt die Ablage einer weiteren Teigschicht in gleicher Weise und so fort. Nachteilig ist dabei insbesondere, dass die Lasagne im Trog von Hand in Portionen geschnitten und in Behälter verpackt werden muss. Der Personalbedarf ist daher relativ hoch.

Es ist daher Aufgabe der vorliegenden Erfindung, ein Verfahren und eine Vorrichtung zu schaffen, mit welcher die Personalkosten für die Herstellung von Fertiglasagnen und ähnlichen Gerichten stark reduziert werden können.

Erfindungsgemäss wird dies bei einem Verfahren der eingangs erwähnten Gattung dadurch erreicht, dass der Ablagevorrichtung ein Teigband zugeführt wird, und dass die Ablagefläche mit praktisch der gleichen Geschwindigkeit bewegt wird, wie die Fördergeschwindigkeit des Teigbandes beträgt. Dieses Verfahren hat den Vorteil, dass es praktisch unabhängig von Variationen der mechanischen Eigenschaften des Teigs ist und somit grundsätzlich vollautomatisch ablaufen kann. Es ist kein manuelles Einlegen von Teigplatten notwendig, wie bei dem eingangs unter Bezugnahme auf Figur 1 beschriebenem bekannten Verfahren. Es muss auch nicht eine grosse Lasagnemasse von Hand in Portionen aufgeteilt und in Schalen eingelegt werden wie beim Verfahren nach der FR-A-2 691 617.

Das erfindungsgemässe Verfahren erlaubt dem Maschinenkonstrukteur erhebliche Flexibilität bei der Konstruktion der Vorrichtung zur Durchführung des Verfahrens. So ist es möglich, dass beim Ablegen einer Teiglage die Ablagevorrichtung in bezug auf die Ablagefläche bewegt wird. Vorzugsweise wird aber beim Fördern einer Teiglage die Ablagefläche in bezug auf die Ablagevorrichtung bewegt. Wie später noch näher erläutert wird, kann zu diesem Zweck die gleiche Fördervorrichtung verwendet werden, welche die Behälter fördert, die die Lasagne aufnehmen. Die Relativbewegung von Ablagevorrichtung und Ablagefläche erfolgt zweckmässigerweise praktisch parallel zur Ablagefläche.

Während bei den einleitend beschriebenen bekannten Anlagen zur Herstellung von Fertiglasagne die Teigplatten erst nach dem Einlegen in den Behälter bzw. den Trog mit Sauce beschichtet werden, ist es mit dem erfindungsgemässen Verfahren möglich, gleichzeitig mit dem Ablegen der Teiglage Sauce auf die Teiglage aufzutragen. Dies stellt eine erhebliche Vereinfachung dar und ermöglicht auch eine Beschleunigung der Herstellung. Das erfindungsgemässe Verfahren schliesst aber nicht aus - sofern dies zweckmässig erscheinen sollte - erst nach dem Ablegen einer Teiglage Sauce auf diese Teiglage aufzutragen. Vorteilhaft wird die Richtung, in welcher die Teiglagen abgelegt werden, von einer Teiglage zur anderen geändert. Dies hat den Vorteil, dass sowohl die Hinbewequng als auch die Herbewegung produktiv sind, also keine Leergänge erfolgen. Es ist aber auch möglich, die Teigablage immer in derselben Richtung vorzunehmen.

Wird die Richtung, in welcher die Teigablage erfolgt, von einer Teiglage zur anderen geändert, so braucht der Teig, welcher als Teigband zugeführt wird, beim Richtungswechsel nicht geschnitten werden, so dass bei jedem Richtungswechsel eine Schlaufe gebildet wird. Das so hergestellte Produkt kann als Schlaufenlasagne bezeichnet werden. Es ist aber auch möglich, den als Teigband zugeführten Teig bei jedem Richtungswechsel zu schneiden, so dass in herkömmlicher Weise Teigplatten übereinanderliegen.

Die Erfindung betrifft auch eine Vorrichtung zur Herstellung von Fertiglasagne oder ähnlichen Gerichten durch Uebereinanderanordnen von Teiglagen und Saucen- oder anderen Füllungsschichten auf einer Ablagefläche. Diese Vorrichtung ist erfindungsgemäss gekennzeichnet durch Teigbandfördermittel, Ablagevorrichtung für Teigband, Antriebsmitteln, um eine Relativbewegung zwischen Ablagevorrichtung und Ablagefläche zu erzeugen, und mindestens einer Saucen- oder Füllungsauftragsvorrichtung. Vorzugsweise ist die Ablagefläche hin und her beweglich. Es ist aber auch möglich, die Ablagevorrichtung hin und her zu bewegen. Der erstgenannte Fall hat den Vorteil, dass die Fördervorrichtung, welche z.B. Schalen fördert, deren Boden die Ablagefläche für die Lasagne bildet, auch zur Hin- und Herbewegung der Schalen benützt werden kann. Von Vorteil ist auch, wenn eine Saucen- oder Füllungsauftragvorrichtung auf mindestens einer Seite der Teigfördervorrichtung angeordnet ist. Dies ermöglicht es, gleichzeitig mit dem Ablegen einer Teiglage diese Teiglage mit Sauce oder Füllung zu bedecken. Besonders vorteilhaft ist es, eine Saucen- oder Füllungsauftragvorrichtung auf jeder Seite der Ablagevorrichtung anzuordnen. Dies ermöglicht es, bei jeder Relativbewegung zwischen Ablagevorrichtung und Ablagefläche Sauce oder Füllung aufzutragen, so dass beispielsweise auch Schlaufenlasagne hergestellt werden kann.

Zweckmässigerweise ist auch eine Schneidvorrichtung bei der Ablagevorrichtung vorgesehen. Es besteht dann keine Notwendigkeit, der Ablagevorrichtung geschnittene Platten zuzuführen, sondern es kann ein Teigband zugeführt werden, das nach der Ablage jeder Teiglage - oder bei der Herstellung von Schlaufenlasagne - am Ende der letzten Teiglage geschnitten wird.

Die Erfindung betrifft auch Lasagne oder ähnliches Gericht, hergestellt gemäss dem beschriebenen Verfahren.

Ein Ausführungsbeispiel der Erfindung wird nun unter Bezugnahme auf die Zeichnung beschrieben. Es zeigt:
- Fig. 1: eine schematische Darstellung einer bekannten Anlage zur Herstellung von Fertiglasagne,
- Fig. 2a: eine schematische Seitenansicht eines Ausführungsbeispiels der erfindungsgemässen Vorrichtung zur Herstellung von Fertiglasagne,
- Fig. 2b: eine Ansicht von oben auf den Förderer für die Schalen, der bei der Vorrichtung von Fig.2a Verwendung findet,
- Fig. 3: den Kopf der Ablagevorrichtung mit zwei Saucenauftragvorrichtungen,
- Fig. 4: eine schematische Darstellung der Verfahrensschritte zur Herstellung von Fertiglasagne als Schlaufenlasagne und
- Fig. 5: eine schematische Darstellung zur Herstellung von herkömmlicher Fertiglasagne.

Die in Fig. 1 dargestellte bekannte Anlage zur Herstellung von Fertiglasagne ist bereits einleitend beschrieben worden. Bei dieser Anlage müssen Teigplatten 27 von vier Bedienungspersonen 1 bis 4 in Schalen 13 eingelegt werden. Sauce wird automatisch durch Saucenportionier- und Saucenauftragvorrichtungen 21 aufgetragen.

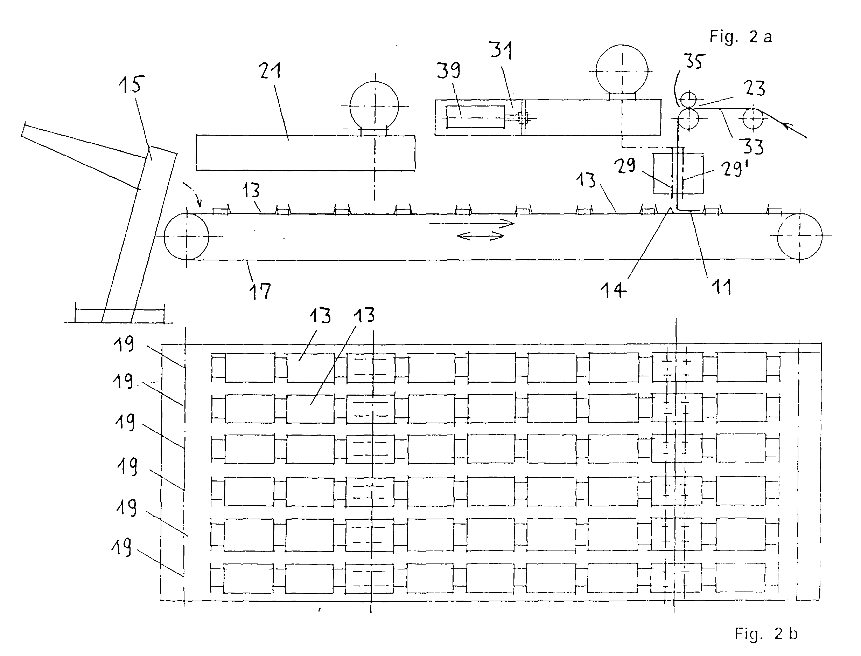

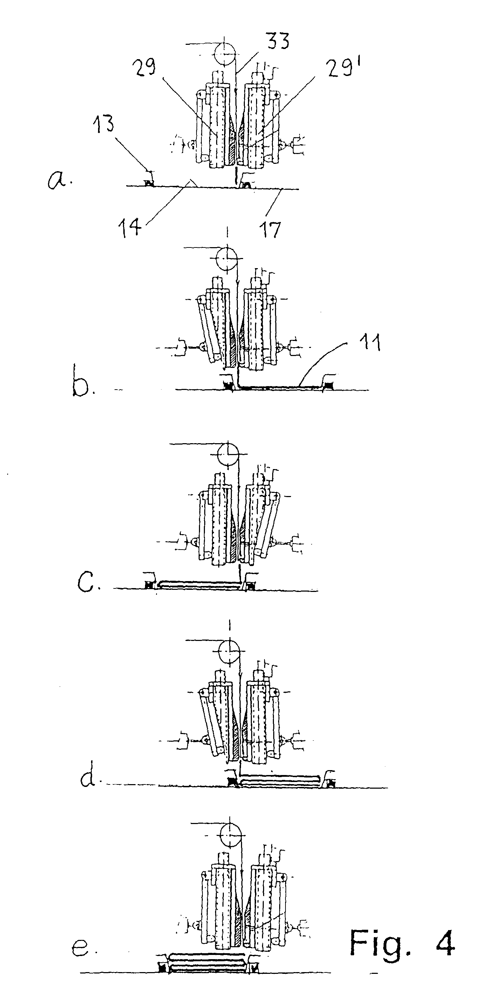

Bei dem in den Figuren 2a, 2b und 3 dargestellten Ausführungsbeispiel der erfindungsgemässen Vorrichtung erfolgt das Einlegen von Teigplatten bzw. Teiglagen 11 in Schalen 13 automatisch. Es ist dem Fachmann ersichtlich, dass sich die erfindungsgemässe Vorrichtung auch zur Herstellung von anderen Gerichten eignet, bei der Teiglagen mit oder ohne Füllung übereinander angeordnet werden. Es ist deshalb keine Beschränkung beabsichtigt, wenn nachfolgend nur von Lasagne die Rede ist.

Ein Schalenabstapler 15 dient der Zufuhr von Schalen 13 auf eine Fördervorrichtung 17. Beim gezeigten Ausführungsbeispiel weist diese sechs parallele Förderbahnen 19 auf, damit sechs Schalen 13 gleichzeitig abgefüllt werden können. Je nach der geforderten Herstellungskapazität können mehr oder weniger Förderbahnen vorgesehen werden. Eine Saucendosier- und Saucenauftragvorrichtung 21 dient dem Einfüllen der Grundsauce in die Schalen 13. Eine Teigfördervorrichtung 23 mit dem gegen die Auflagefläche 14 der Schale 13 gerichteten Kopf 25 dient dem Ablegen von Teiglagen 11 in die Schale 13. Der Förderung des jeweiligen Teigbandes 33 dient ein angetriebenes Rollenpaar 35. Durch den Führungskanal 37 (Fig.3) im Kopf 25, der vorzugsweise senkrecht zur Ablagefläche 14 angeordnet ist, wird das aus rohem oder blanchierten Teig bestehende Teigband 33 gegen die Ablagefläche 14 geleitet. Auf beiden Seiten des Kopfes 25 ist eine Saucenauftragvorrichtung 29, 29' vorgesehen. Die Sauceauftragvorrichtungen 29, 29' stellen Teile der Saucendosier- und Saucenauftragvorrichtung 31 dar. Die Fördervorrichtung 17, mit welcher die Schalen 13 unter dem Kopf 25 transportiert werden, kann auch dazu benutzt werden, die Schalen 13 beim Ablegen der Teiglagen unter dem Kopf 25 hin und her zu bewegen. Es ist aber auch möglich, statt die Schalen 13 den Kopf 25 parallel zur Ablagefläche 14 hin und her zu bewegen. Zu diesem Zweck kann ein Antriebsorgan 39, z.B. ein pneumatischer Zylinder, vorgesehen werden, mit welchem die Saucendosiervorrichtung 31 samt der Teigfördervorrichtung 23 hin und her bewegt werden kann.

Wie Fig.3 zeigt, ist auf beiden Seiten des Kopfes 25 eine Saucenauftragvorrichtung 29, 29' vorgesehen. Von diesen sind nur die Schläuche 30, 30' ersichtlich, die neben der Mündung 41 des Führungskanals 37 münden. Mittels eines durch einen pneumatischen Zylinder 43, 43' betätigbaren Klemmhebels 45, 45' kann der Schlauch 29, 29' zugeklemmt werden, um ein Abtropfen von Sauce zu vermeiden, wenn keine Saucenförderung stattfindet. Saucendosier- und Saucenauftragvorrichtungen sind im Handel erhältliche Produkte und benötigen daher keiner näheren Beschreibung für das Verständnis und die Ausführbarkeit der vorliegenden Erfindung. Am Kopf 25 ist weiter eine Schneidvorrichtung 47 angeordnet, welche mittels eines hydraulischen Zylinders 49 betätigbar ist.

Die Herstellung von Schlaufenlasagne wird nun unter Bezugnahme auf Fig. 4 beschrieben. Der vollständigkeithalber sei aber zuerst erwähnt, dass vom Schalenabstapler 15 (Fig.2a)jeweils gleichzeitig z.B. sechs Schalen 13 auf die Fördervorrichtung 17 abgelegt werden. Diese transportiert die Schalen 13 unter der ersten Saucendosier- und Saucenauftragvorrichtung 21 hindurch, wo der Boden 14 der Schalen 13 mit Sauce bedeckt wird. Befindet sich die jeweilige Schale 13 unter dem Kopf 25 kann der in Fig.4 dargestellte Füllvorgang beginnen. Es finden folgende Schritte statt:
a) Das Teigband 33 wird praktisch senkrecht gegen den die Ablagefläche bildenden Schalenboden 14 hin gefördert, und es wird vom einen Ende zum andern Ende der Ablagefläche 14 hin eine erste Teiglage 11 abgelegt (Fig.2a). Gleichzeitig wird von der Saucenauftragvorrichtung 29' Sauce aufgetragen.
b) Das andere Ende der Ablagefläche 14 wird erreicht; die Saucezufuhr von der Sauceauftragvorrichtung 29' wird unterbrochen. Die Ablage der zweiten Teiglage beginnt in umgekehrter Richtung. Gleichzeitig wird von der Sauceauftragvorrichtung 29 Sauce aufgetragen.
c) Die Ausgangsstellung von a) wird erreicht; die Saucenzufuhr von der Saucenauftragvorrichtung 29 wird unterbrochen. Die Ablage der dritten Teiglage beginnt.
d) Ablage der dritten Teiglage erfolgt wie jene der ersten gemäss a).
e) Ablage der vierten Teiglage erfolgt wie jene der zweiten gemäss b). Nach dem Ablegen der vierten Teiglage wird jedoch das Teigband 33 geschnitten. Es wäre aber möglich, mehr oder weniger als vier Teiglagen abzulegen.

Nach dem Schneiden werden die Schalen um einen weiteren Takt weiter bewegt, so dass wieder neue Schalen 13 unter die jeweiligen Köpfe 25 zu liegen kommen, damit ein neuer Füllvorgang erfolgen kann.

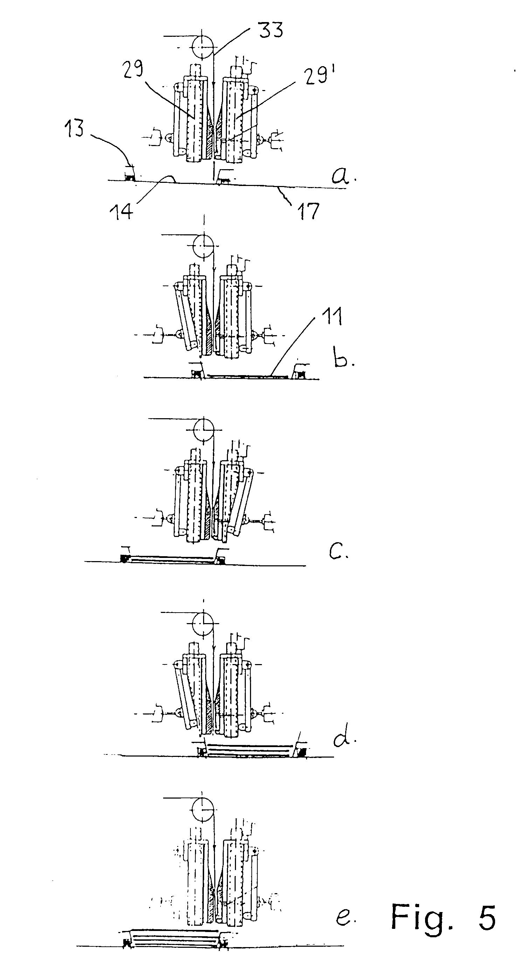

Das so hergestellte Produkt ist eine Schlaufenlasagne. Wie aber Fig.5 zeigt, kann mit dem grundsätzlich gleichen Verfahren auch eine herkömmliche Lasagne hergestellt werden. Das Verfahren nach Fig.5 unterscheidet sich von jenem von Fig.4 nur dadurch, dass nach dem Ablegen jeder Teigschicht das Teigband 33 geschnitten wird.

Die Erfindung ist nicht auf die beschriebenen Ausführungsbeispiele beschränkt. So wäre es z.B. möglich, auf die erste Saucendosier- und Saucenauftragvorrichtung 21 zu verzichten und mit der zweiten Saucendosier- und Saucenauftragvorrichtung 31,29 Sauce auf den Schalenboden 14 aufzutragen, wenn die Schale 13 in die Stellung unter dem Kopf 25 gefördert wird.

## Patentansprüche

1. Verfahren zur Herstellung von Fertiglasagne oder ähnlichen Gerichten durch Uebereinanderanordnen von Teiglagen (11) und Saucen- oder anderen Füllungsschichten auf einer Ablagefläche (14), bei welchem Verfahren die Teiglagen (11) mit einer Ablagevorrichtung (23) von einem Ende zum andern der Ablagefläche (14) abgelegt werden, dadurch gekennzeichnet, dass der Ablagevorrichtung (23) ein Teigband (33) zugeführt wird, und dass die Ablagevorrichtung (23) bzw. die Ablagefläche (14) mit praktisch der gleichen Geschwindigkeit bewegt wird, wie die Fördergeschwindigkeit des Teigbandes beträgt.

2. Verfahren nach Anspruch 1, dadurch gekennzeichnet, dass beim Ablegen einer Teiglage (11) die Teigfördervorrichtung (23) in bezug auf die Ablagefläche (14) bewegt wird.

3. Verfahren nach Anspruch 1, dadurch gekennzeichnet, dass beim Ablegen einer Teiglage (11) die Ablagefläche (14) in bezug auf die Ablagevorrichtung (23) bewegt wird.

4. Verfahren nach Anspruch 2, dadurch gekennzeichnet, dass die Bewegung praktisch parallel zur Ablagefläche (14) erfolgt.

5. Verfahren nach einem der Ansprüche 1 bis 4, dadurch gekennzeichnet, dass gleichzeitig mit dem Ablegen Sauce oder Füllung auf die Teiglage (11) aufgetragen wird.

6. Verfahren nach einem der Ansprüche 1 bis 3, dadurch gekennzeichnet, dass nach dem Ablegen einer Teiglage (11) Sauce auf diese Teiglage (11) aufgetragen wird.

7. Verfahren nach einem der Ansprüche 1 bis 6, dadurch gekennzeichnet, dass die Richtung, in welcher die Teiglagen (11) abgelegt werden, von einer Teiglage (11) zur andern geändert wird.

8. Verfahren nach Anspruch 7, dadurch gekennzeichnet, dass durch das Teigband (33) bei jeder Aenderung der Richtung eine Schlaufe gebildet wird.

9. Verfahren nach Anspruch 9, dadurch gekennzeichnet, dass das Teigband (33) bei jeder Richtungsumkehr geschnitten wird.

10. Vorrichtung zur Herstellung von Fertiglasagne oder ähnlichen Gerichten durch Uebereinanderanordnen von Teiglagen (11) und Saucen- oder anderen Füllungsschichten auf einer Ablagefläche (14), gekennzeichnet durch Teigbandfördermittel (25), einer Ablagevorrichtung (23) für Teigband, Antriebsmitteln (17, 39), um eine Relativbewegung zwischen Ablagefördervorrichtung (23) und Ablagefläche (14) zu erzeugen, und mindestens einer Saucen- oder Füllungsauftragvorrichtung (29, 29').

11. Vorrichtung nach Anspruch 10, dadurch gekennzeichnet, dass eine Fördervorrichtung (17) vorgesehen ist, um nach jedem Beladen einer Ablagefläche oder einer eine Ablagefläche aufweisenden Schale (13) eine neue Ablagefläche oder Schale zuzuführen.

12. Vorrichtung nach Anspruch 1 oder 11, dadurch gekennzeichnet, dass die Antriebsmittel (39) mit der Ablagevorrichtung (23) gekuppelt sind, um die Ablagevorrichtung (23) hin und her zu bewegen.

13. Vorrichtung nach Anspruch 10, dadurch gekennzeichnet, dass die Ablagefläche (14) durch Antriebsmittel (17) hin- und herbewegbar ist.

14. Vorrichtung nach Anspruch 10, dadurch gekennzeichnet, dass die Fördervorrichtung (17) für die Ablagefläche (14) zugleich der Hin- und Herbewegung der Ablagefläche (14) dient.

15. Vorrichtung nach einem der Ansprüche 10 bis 14, dadurch gekennzeichnet, dass mindestens auf einer Seite des Kopfes (25) der Ablagevorrichtung eine Saucenauftragvorrichtung (29, 29') angeordnet ist.

16. Vorrichtung nach Anspruch 15, dadurch gekennzeichnet, dass je eine Saucenauftragvorrichtung (29, 29')auf jeder Seite des Kopfes (25) der Ablagevorrichtung angeordnet ist.

17. Vorrichtung nach einem der Ansprüche 10 bis 16, dadurch gekennzeichnet, dass eine Schneidevorrichtung (47) für das Teigband (33) vorgesehen ist.
